# EUROPÄISCHE PATENTSCHRIFT

(11) **EP 2 393 590 B1**
(45) Veröffentlichungstag und Bekanntmachung des Hinweises auf die Patenterteilung: **28.01.2015**
(21) Anmeldenummer: 10703812.7
(22) Anmeldetag: 05.02.2010
(51) Int. Cl.: B01J 20/10, B01J 20/20, B01J 20/28, B01D 53/28, E04C 2/04, B32B 13/00, C04B 14/16, C04B 14/06, C04B 12/04, C04B 14/02

(54) **FEUCHTESPEICHERNDES STOFFGEMISCH UND DESSEN HERSTELLUNGSVERFAHREN, VERWENDUNG DES STOFFGEMISCHES IN FEUCHTESPEICHERPLATTEN, SOWIE HERSTELLUNGSVERFAHREN FÜR FEUCHTESPEICHERPLATTEN**
MOISTURE-STORING MIXTURE OF SUBSTANCES AND METHOD FOR PRODUCING THE SAME, USE OF THE MIXTURE OF SUBSTANCES IN MOISTURE-STORING PANELS AND METHOD OF PRODUCTION FOR MOISTURE-STORING PANELS
MÉLANGE DE SUBSTANCES STOCKANT L'HUMIDITÉ, PROCÉDÉ DE PRÉPARATION DU MÉLANGE, UTILISATION DU MÉLANGE DANS DES PANNEAUX DE STOCKAGE D'HUMIDITÉ ET PROCÉDÉ DE FABRICATION DE PANNEAUX DE STOCKAGE D'HUMIDITÉ

(30) Priorität: 09.02.2009 CH 193092009
(43) Veröffentlichungstag der Anmeldung: 14.12.2011
(73) Patentinhaber: EMPA, 8600 Dübendorf (CH)
(72) Erfinder: STAHL, Thomas, CH-9604 Lütisburg (CH); SIMMLER, Hans, CH-8636 Wald (CH); BRAUN, Reiner, 70806 Kornwestheim (DE); BLESSING, Rudi, CH-8610 Uster (CH)
(74) Vertreter: Gottschalk, Matthias
(86) Internationale Anmeldenummer: PCT/EP2010/000734
(87) Internationale Veröffentlichungsnummer: WO 2010/089136

(56) Entgegenhaltungen:
- EP-A2- 0 278 061
- EP-A2- 1 847 318
- DE-A1- 4 343 358
- JP-A- 5 262 511
- JP-A- 49 010 194
- JP-A- 54 087 694
- JP-A- 2002 178 444
- US-A- 4 645 519
- DATABASE WPI Week 200858 Thomson Scientific, London, GB; AN 2008-J90904 XP002610470 & JP 2008 184379 A (ENVIRONMENT TECHNOLOGY VENTURES KK) 14. August 2008 (2008-08-14)
- DATABASE WPI Week 200611 Thomson Scientific, London, GB; AN 2006-101552 XP002553196 & CN 1 663 675 A (SHANGHAI CHEM ACAD) 7. September 2005 (2005-09-07)

## Beschreibung

### Technisches Gebiet

Die vorliegende Erfindung beschreibt ein feuchtespeicherndes Stoffgemisch und sein Herstellungsverfahren, sowie die Verwendung des feuchtespeichernden Stoffgemisches in Feuchtespeicherplatten, sowie ein Herstellungsverfahren der Feuchtespeicherplatten.

### Stand der Technik

Räume, die von Menschen bewohnt, oder in einer anderen Weise von Menschen genutzt werden, unterliegen einer ständigen Beanspruchung durch Wasserdampf. Durch Duschvorgänge, Kochen, Waschen, Haustiere, Pflanzen usw. entsteht oft eine zu hohe Raumluftfeuchtigkeit, welche bei geringer Lüftung zu Schimmelpilzbefall, Bauschäden, Gesundheitsproblemen der Bewohner und allgemeinen Einbussen der Behaglichkeit führt. In Haushalten, wo alle Bewohner berufstätig sind, ist ein optimales Lüftungsverhalten wie 5 - 10 Minuten Querlüftung nach der Produktion von Feuchtelasten, oft nicht möglich. Hohe Feuchteaufkommen, wie z.B. durch morgendliche Duschvorgänge, werden aus Zeitmangel nicht optimal abgelüftet. Die heutige, energetisch sinnvolle luftdichte Bauweise der Gebäude senkt den natürlichen Luftwechsel über Undichtigkeiten wie z.B. Fugen und Spalten an Fenstern auf ein Minimum und reicht längst nicht mehr aus, um Luftfeuchte aus den Räumen hinaus zu befördern. Deshalb sind moderne Gebäude viel anfälliger auf ein "falsches" Lüftungsverhalten der Bewohner als ältere undichte Häuser. Luftdichte Bauweise und unzureichende Lüftung sind nicht nur bei Neubauten oftmals Hauptursachen für Schädigungen an der Bausubstanz. Der grosse Altbaubestand wird ständig erneuert und für Wohnzwecke nach dem heutigen Stand luftdicht gemacht.

Deshalb ist es sehr wichtig, Innenoberflächen aus sehr gut feuchtespeichernden Materialien herzustellen. Diese Materialien müssen in der Lage sein, schnell auf Feuchtelasten zu reagieren, den entstandenen Wasserdampf zu speichern und anschliessend, wenn die relative Luftfeuchte durch zeitversetzte Lüftungsvorgänge wieder absinkt, die eingespeicherte Feuchte auch schnell wieder abzugeben. Wichtig ist allerdings, dass durch feuchtespeichernde Innenraummaterialien keineswegs auf die Lüftung verzichtet werden kann. Es muss immer gelüftet werden und somit den Speichermaterialien die Möglichkeit gegeben werden, sich wieder zu entladen. Dabei ist die kurzfristige Reaktion des Baustoffs auf eine Feuchteänderung für das Raumklima von grösserer Bedeutung als die Kapazität unter stationären Bedingungen, welche durch die Sorptionsisotherme angegeben wird.

Auch bei besonderer Nutzung von Räumen, wie dies beispielsweise in Museen, Versammlungsräumen, historischen Gebäuden oder Archiven der Fall ist, steht nur eine geringe Bandbreite für das Optimum der relativen Luftfeuchtigkeit zur Verfügung, um Kunstwerke und Kulturgüter vor feuchtebedingten Schädigungen zu schützen. Denn Kunstwerke wie Gemälde und sonstige Kul-turgüter reagieren auf starke Feuchteschwankungen äusserst sensibel und werden geschädigt. Kritisch ist die Lagerung von feuchteadaptiven Kunstgütern in einem Raum ohne weitere Feuchtespeicherflächen. Hohe Feuchteeinträge werden in diesem Bereich hauptsächlich durch das Personenaufkommen verursacht. Gerade hier bietet sich der Einsatz spezieller Feuchtespeicherplatten geradezu an, um die relative Luftfeuchtigkeit auch ohne bzw. mit stark vermindertem Aufwand von energieintensiven Luftentfeuchtern im geforderten Optimum zu halten. Besonders in Museen ist zum Schutz von Kulturgütern die relative Luftfeuchtigkeit in einem Bereich zwischen 40 % und 60 % einzuhalten.

Zur Bestimmung der Feuchtespeichereigenschaft von Stoffgemischen und Formteilen dient der Moisture Buffer Value (MBV), der im Wesentlichen die flächenbezogene Feuchteaufnahme des Materials bei einer stufenartigen Erhöhung der relativen Luftfeuchte von 33 % auf 75 % nach 8 Stunden beschreibt. Dabei wird ein möglichst hoher MBV in g/(m2 %relative Luftfeuchtigkeit) angestrebt.

In der Offenlegungsschrift DE 10241978A1 wird ein feuchteregulierendes Formteil beschrieben, bei welchem die Nichtbrennbarkeit und die Schallabsorption im Vordergrund stehen. Angaben zum MBV und damit zur dynamischem Feuchtespeicherkapazität des Materials, das ausschliesslich aus mineralischen Komponenten wie Mineralschaumgranulat und/oder Blähglas und/oder expandiertem Mineral besteht, werden allerdings nicht gemacht.

Die Anmeldung EP 1847318A2 beschreibt ein mit Adsorbentien beaufschlagtes Plattenmaterial mit Aktivkohle für den Trockenbau zur Beseitigung von Emissionen von Schad- und Geruchsstoffen, insbesondere PCB, vorzugsweise in Gebäuden. Eine Beeinflussung der Raumluftfeuchte wird nicht erwähnt. Zur Herstellung wird Aktivkohle auf eine herkömmliche Bauplatte aufgebracht bzw. in einen herkömmlichen Werkstoff wie Gips eingerührt. Dabei wird richtigerweise darauf hingewiesen, dass diese Form der Einbringung die Funktion der Aktivkohle reduziert. Auf die Realisierung, die Eigenstabilität und die Wirksamkeit einer solchen modifizierten Standardbauplatte wird nicht eingegangen. Aufgrund von eigenen Versuchen ist die erreichbare Feuchtespeicherung noch verbesserungsfähig.

US-A-4,645,519 offenbart einen feuchtespeicherndes Stoffgemisch enthaltenden Verbundwerkstoff.

### Darstellung der Erfindung

Die vorliegende Erfindung hat sich zur Aufgabe gestellt ein Stoffgemisch aus Komponenten zu schaffen, welches sehr gute dynamische Feuchtespeichereigenschaften aufweist, unbrennbar, eigenstabil und in Formteilen herstellbar ist.

Die Aufgabe der Herstellung von Feuchtespeicherplatten für das Baugewerbe, zum Beispiel für die Innenverkleidung von Räumen, wird durch die Verwendung des erfindungsgemässen Stoffgemisches ebenfalls gelöst.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt ein Diagramm zur Feuchteaufnahme u. Geschwindigkeit der Feuchteaufnahme der erfindungsgemässen Feuchtespeicherplatte und Platten gemäss Stand der Technik.
- Figur 2: zeigt ein Diagramm der Feuchteaufnahme der erfindungsgemässen Feuchtespeicherplatte und Platten gemäss Stand der Technik in einem Zeitfenster von vier Stunden.
- Figur 3a und 3b: zeigen die zeitliche Entwicklung der Konzentrationsabnahme von Heptan (Alkangemisch) und Limonen (Terpene) in einer leeren Box im Vergleich mit der Konzentrationsabnahme in derselben Box mit einer flachen Feuchtespeicherplatte.
- Figur 4: zeigt zwei Schallabsorptionsmessungen von Feuchtespeicherplatten.

### Beschreibung

Es wird ein neuartiges Stoffgemisch mit feuchtespeichernden und feuchteabgebenden Eigenschaften beschrieben, welches einen bislang unerreichten Moisture Buffer Value (MBV) aufweist. Aus dem erfindungsgemässen Stoffgemisch sind Formteile, insbesondere Feuchtespeicherplatten 1 für das Baugewerbe herstellbar, welche einen möglichst hohen MBV aufweisen sollten. Da das erfindungsgemässe Stoffgemisch einen MBV im Bereich von grösser 5.5 g/(m² %r.F.) aufweist, bietet sich die Herstellung und kommerzielle Nutzung von Formteilen für das Baugewerbe an.

Das erfindungsgemässe Stoffgemisch umfasst neben einer Hauptkomponente, aus Luftaktivkohle, ein Bindemittel aus Wasserglas, insbesondere Kali-Wasserglas. Wassergläser sind amorphe, nicht-kristalline Verbindungen aus wasserlöslichen Alkalisilikaten. Hergestellt wird Kali-Wasserglas meist aus einem Gemenge aus hochreinem Quarzsand (SiO2) und Kaliumcarbonat, welches bei hohen Temperaturen verschmolzen wird. Nach dem Abkühlen und dem Zermahlen der Schmelze zu Pulver wird dieses in Wasser gelöst.
Als Füllmittel dienen Bims, umfassend insbesondere Kieselsäure, Tonerde, Natriumoxid, Kaliumoxid, Eisenoxid, Calciumoxid, Magnesiumoxid und Titandioxid, und Blähtonsand, umfassend insbesondere Kieselsäure, Tonerde, Eisenoxid und Calciumoxid), und Pyrogene Kieselsäure, umfassend Sauerstoffsäuren des Siliziums und Siliziumdioxid.
Versuche haben gezeigt, dass Blähton mit Korngrössen von etwa 40 mm Durchmessern nicht für das erfindungsgemässe Stoffgemisch bzw. die Feuchtespeicherplatten 1, 2 verwendbar ist, bzw. nicht zu vergleichbar guten Ergebnissen führt.

Die im Folgenden gemachten Mengenangaben werden in Gewichts- oder Massenprozent angegeben und mit M-% abgekürzt.

### Mischungsverhältnis einer möglichen Ausführungsform des Stoffgemisches

Ein Ausführungsbeispiel eines erfindungsgemässen Stoffgemisches weist ein Mischungsverhältnis von:
etwa 50 M-% Luftaktivkohle (Hauptbestandteil),
etwa 33 M-% Bims (Füllmittel),
etwa 2 M-% pyrogene Kieselsäure (Füllmittel),
etwa 10 M-% Blähtonsand (Füllmittel),
   und
eine Menge von 800 ml des Bindemittels in Form von flüssigem Wasserglas oder Kali-Wasserglas pro Kilogramm des Stoffgemisches aus Hauptbestandteil und Füllmittel auf.

Für die Herstellung des Stoffgemisches, sowie die daraus hergestellten Feuchtespeicherplatten 1, 2 ist das Kalium-Wasserglas Kaliumsilikat Inobond K-4009 mit einer Dichte von 1394 g/L und einem ph-Wert von 11,7 einsetzbar und hat zu ausgezeichneten Ergebnissen geführt.

Durch Einsatz von Wasserglas als Bindemittel werden die einzelnen Komponenten des Stoffgemisches ohne Versiegelung der Partikeloberflächen miteinander verklebt. Wichtig ist hierbei, dass durch diese Form der Komponentenverbindung die Feuchtespeichereigenschaften der einzelnen Komponenten nicht nachteilig beeinflusst werden.

Das zur Verwendung kommende Bindemittel Kali-Wasserglas besitzt einen ph-Wert von grösser 11. Dies bewirkt auch, dass das Stoffgemisch und die daraus hergestellten Feuchtespeicherplatten einen ph-Wert deutlich im basischen Bereich von grösser 11 besitzen (eigene Messung). Durch eine Beschichtung des Stoffgemisches oder der Feuchtespeicherplatten mit Kalkfarbe erhöht sich der ph-Wert zusätzlich. Der hohe ph-Wert liegt für die meisten Schimmelpilzarten in einem Bereich, indem kein Wachstum möglich ist, wodurch aus dem Kali-Wasserglas eine fungizide Wirkung des Stoffgemisches und der Feuchtespeicherplatten resultiert.

Durch die Verwendung von Materialien mit grosser innerer Oberfläche und unterschiedlicher Korngrösse wird pro cm³ eine hohe Packungsdichte und somit einige tausend m² Oberfläche geschaffen, an der sich Wassermoleküle anlagern können. Durch die Kombination von Bestandteilen mit unterschiedlicher Korngrösse entsteht eine für die Eigenstabilität wichtige kompakte, aber dennoch diffusionsoffene Struktur, wodurch ein Einsatz des Stoffgemisches als Feuchtespeicherplatte 1, 2 erleichtert wird.

### Feuchtespeicherplatten:

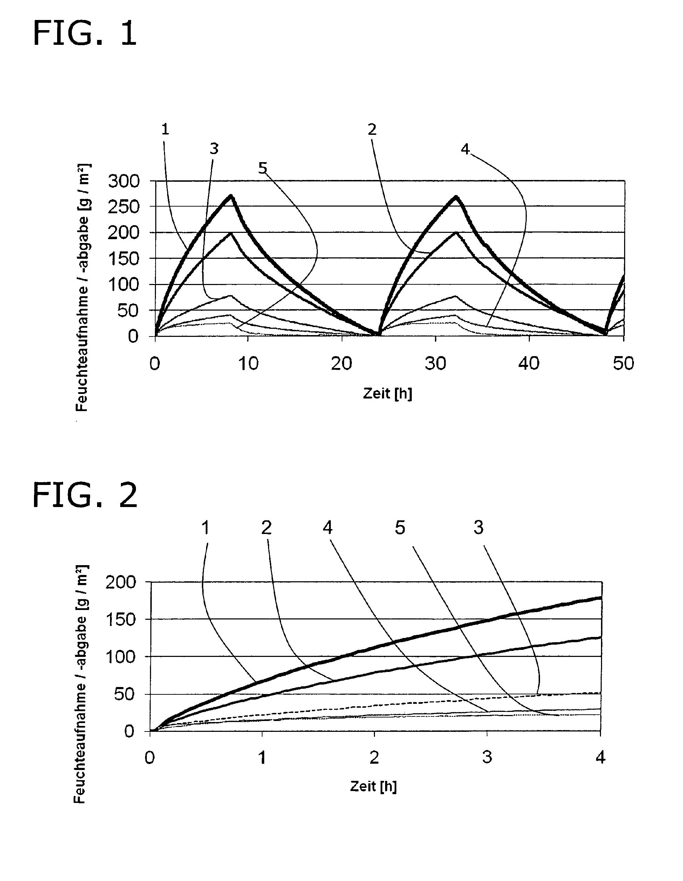

Aus dem hier beschriebenen Stoffgemisch sind insbesondere Feuchtespeicherplatten 1 herstellbar, welche bislang nicht erreichte Feuchtespeichereigenschaften aufweisen.
Wie in Figur 1 gezeigt, sind Feuchtespeicherplatten 1, 2 mit flacher glatter Oberfläche als flache Feuchtespeicherplatten 2, oder mit einer strukturierten Oberfläche versehen, als strukturierte Feuchtespeicherplatten 1 herstellbar.

Eine Strukturierung bewirkt dabei eine Vergrösserung der der feuchten Umgebungsluft ausgesetzten Oberfläche und somit können sich mehr Wassermoleküle an einer grösseren Oberfläche anlagern. Hierbei sind alle bekannten bzw. technisch machbaren Strukturierungen denkbar. Jede Struktur hat dabei ihre ganz spezifischen Eigenschaften bezüglich einer Verbesserung der Feuchteaufnahme. Auch durch, eine flache Feuchtespeicherplatte 2 teilweise oder vollständig querende Bohrungen ist es möglich, die Oberfläche zu vergrössern, wodurch eine sogenannte Lochplatte erzeugt wird.

Die Korngrössen der Einzelkomponenten des Stoffgemisches können jederzeit durch Zerkleinerung variiert werden. So ist sowohl eine grobstrukturierte, als auch eine feinkörnige Oberfläche in jeder Abstufung machbar.

Neben dem beschriebenen Stoffgemisch umfassen die Feuchtespeicherplatten 1, 2 zusätzlich mindestens ein Verstärkungsmittel in Form von Armierungsfasern. Die Armierungsfasern dienen zur Unterstützung und Sicherstellung der Eigenstabilität der Feuchtespeicherplatten 1, 2. Als Verstärkungsmittel in Form von Armierungsfasern sind insbesondere Glasfasern und/oder Kohlefasern in diversen und kommerziell erhältlichen Abmessungen einsetzbar.

Ein Beispiel eines bevorzugten Stoffgemisches für den Einsatz in Feuchtespeicherplatten 1, 2 umfasst neben dem oben erwähnten Mischungsverhältnis aus Hauptbestanteil, Füllmittel und Bindemittel, zusätzlich noch Verstärkungsmittel, insbesondere in Form von Glasfasern und/oder Kohiefasern

In einer bevorzugten Ausführungsform umfasst eine Feuchtespeicherplatte 1,2 ein Mischungsverhältnis von:
etwa 50 M-% Luftaktivkohle (Hauptbestandteil),
etwa 33 M-% Bims (Füllmittel),
etwa 2 M-% pyrogene Kieselsäure (Füllmittel),
etwa 10 M-% Blähtonsand (Füllmittel),
etwa 5 M-% Glasfaserschnitzel (Verstärkungsmittel)
   und
eine Menge von 800 ml des Bindemittels in Form von flüssigem Wasserglas oder Kali-Wasserglas pro Kilogramm des Stoffgemisches. Die Glasfaserschnitzel weisen vorteilhaft 6 mm Korngrössen auf.

Zur Herstellung der erfindungsgemässen Feuchtespeicherplatten werden in einer bevorzugten Ausführungsform dem oben beschriebenen Stoffgemisch als Verstärkungsmittel jeweils etwa zwischen 0,1 und 10 M-%, bevorzugt 0,5 M-% Glasfasern und/oder zwischen 0,1 und 10 M-%, bevorzugt 4,5 M-% Kohlefasern zugemischt, bevor das Stoffgemisch mit Wasserglas versetzt wird und der Formungsvorgang beginnt.

Die Feuchtespeicherplatten 1,2 können in unterschiedlichen Grössen und Dicken hergestellt werden. Vorzugsweise mit den Massen 0,5 x 0,5 x 0,025 m. Sie lassen sich sehr gut bohren und sägen, ohne Beschädigung und Ausbrüche des umliegenden Bereichs. Die guten mechanischen Eigenschaften erhalten die Feuchtespeicherplatten 1, 2 einerseits durch den Anteil des Verstärkungsmittels, beispielsweise bestehend aus Kohlefasern und/oder Glasfasern, andererseits durch die Verwendung eines inliegenden Glasgittergewebes. Vorteilhaft ist die Anordnung des inliegenden Glasgittergewebes, beispielsweise mit einer Maschenweite von 10 mm, zentral in der Mitte der Feuchtespeicherplatte 1, 2.

Die Feuchtespeicherplatten 1,2 sollen keinen Dämmstoff darstellen oder dämmstoffartige Eigenschaften aufweisen. Die Feuchtespeicherplatten 1,2 sind für eine direkte Decken- oder Wandbefestigung konzipiert. Eine niedrige Wärmeleitfähigkeit wie bei Dämmstoffen ist daher nicht erwünscht, da die Feuchtespeicherplatte 1,2 Wärme schnell an die schweren Bauteile, wie z.B. die Betondecke, weiterleiten soll. Dies wird hauptsächlich durch den Einsatz von Kohlenstoff, als gutem Wärmeleiter erreicht.

### Herstellungsverfahren einer Ausführungsform des Stoffgemisches:

- In einem sauberen Gefäss werden die benötigten, einzelnen Komponenten exakt auf einer Präzisionswaage abgewogen.
- Durchmischung der Komponenten mit einem langsam laufenden Rührwerk bei ca. 20 °C und 50 % relativer Luftfeuchte bis alles gut miteinander vermischt ist (ca. 3 - 5 Minuten).
- Abmessen des Anteils an flüssigem Kali-Wasserglas bezogen auf die Menge der Trockenmischung aus Hauptbestandteil, Füllmittel und gegebenenfalls Verstärkungsmittel.
- Langsames Zugeben des flüssigen Kali-Wasserglases in die Trockenmischung. Unter ständigem Rühren mit einem langsam laufenden Rührwerk wird bei ca. 20 °C und 50 % relativer Luftfeuchte und ca. 3 Minuten Dauer die Trockenmischung aus Hauptbestandteil, Füllmittel und gegebenenfalls Verstärkungsmittel mit dem Kali-Wasserglas zu einer einheitlichen Masse verrührt.

Das Bindemittel wird in flüssiger Form dem pulverförmigen Stoffgemisch oder auch Trockenmischung zugeführt.

### Herstellung der Feuchtespeicherplatten aus einem Stoffgemisch:

- Befüllen einer Form:
   Das Stoffgemisch kann nun in die dafür vorgesehenen Formen (entweder mit Strukturierung oder flach) eingebracht werden. Beim Befüllen ist darauf zu achten, dass das Stoffgemisch immer wieder verdichtet wird. Die Einfüllhöhe beträgt ca. 10 % über den Rand der Form hinaus.
- Pressung:
   Die befüllte Form kommt danach sofort in eine hydraulische Presse. Dort wird sie unter einem Druck von etwa 35000 N / m2 gepresst, bis der Überstand eben mit dem Rand der Form ist.
- Härtung:
   Bei ca. 23 °C und 50 % relativer Luftfeuchte wird das Stoffgemisch in der Form für ca. 4 bis 5 Stunden durch CO2 Aufnahme aus der Umgebungsluft gehärtet. Danach wird die Form entfernt. Die Härtung kann zur Beschleunigung des Vorgangs durch CO2 Zuführung (z.B. in einem Trockentunnel) erfolgen.
- Trocknung: Anschliessend wird das gehärtete Stoffgemisch in Form der Feuchtespeicherplatten 1, 2 zwischen 10 °C und 35 °C, bevorzugt bei ca. 23 °C und zwischen 20 % und 70%, bevorzugt bei 35 % relativer Luftfeuchte für ca. 48 bis 72 Stunden getrocknet.

Neben der Strukturierung durch die Befüllung entsprechender Formen, kann auch eine Strukturierung nach Pressung, Härtung und Trocknung der Feuchtespeicherplatten durchgeführt werden. Dazu können beispielsweise Bohrungen in die Rohlinge der Feuchtespeicherplatten 1, 2 eingebracht werden, wodurch die aktive Oberfläche der Feuchtespeicherplatten 1, 2 vergrössert wird.

Die Herstellung der Feuchtespeicherplatten 1, 2 kann auch in einem industriellen Prozess erfolgen. Beispielsweise werden horizontale Plattenformen ohne oder mit Strukturierung automatisiert befüllt, gepresst und durch eine Aushärtezone und eine Trocknungszone mit ausreichender Verweilzeit geführt.

Eine andere Möglichkeit ist ein kontinuierlicher Herstellungsprozess auf einem Transportband mit einer Walzenpresse, Unterteilung in ein gewünschtes Format, anschliessender Aushärtung, sowie einer individuellen Strukturierung wie beispielsweise bohren, fräsen usw.

### Resultate:

Die Gesamtaufnahme von Wasserdampf aus der Raumluft ist eine wichtige Eigenschaft der flachen Feuchtespeicherplatte 2, der strukturierten Feuchtespeicherplatte 1, die in Figur 1 exemplarisch im Vergleich zu einer Lehmbauplatte 3, einer unbehandelten Gipskartonplatte 5 und einer Calciumsilikatplatte 4 gezeigt wird. F

Für die Versuche wurde in einem Klimaschrank eine stufenförmige Erhöhung der Luftfeuchte bei konstant 23 °C von 33 auf 75 % r.F. gefahren, wie es beim Nordtest für Innenraummaterialien empfohlen wird. Bei kurzzeitigen Erhöhungen der Raumluftfeuchte ist es sehr wichtig, wie schnell ein Baustoff auf Feuchteschwankungen reagieren kann. Dieses Reaktionsvermögen ist an dem steilen Anstieg bzw. steilen Abfall der Feuchtegehaltskurven in Figur 1 zu erkennen.

Die Steigung und somit Geschwindigkeit der Feuchteaufnahme, um auf eine Erhöhung der Raumluftfeuchte reagieren zu können zeigt Figur 2 bei dem ein Zeitfenster von 4 Stunden betrachtet wird. Auch hier zeigt sich eine deutliche Überlegenheit der erfindungsgemässen flachen oder strukturierten Feuchtespeicherplatte 1, 2 gegenüber heute üblichen und gut sorptionsfähigen Baumaterialien gemäss Stand der Technik.

Versuche haben gezeigt, dass das Stoffgemisch bzw. die daraus hergestellten Feuchtespeicherplatten 1, 2 die Anlagerung von Geruchs- bzw. Schadstoffen aus der Raumluft am Stoffgemisch bzw. an den Feuchtespeicherplatten 1, 2 fördern.

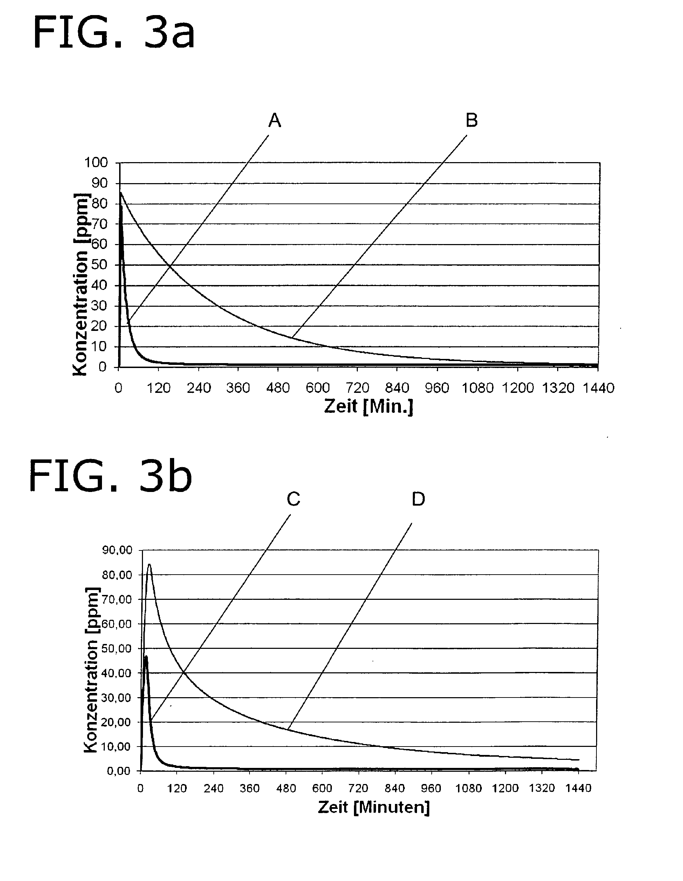

In eine Box mit 223 Liter Volumen wurden 50 µl der jeweiligen Substanz eingebracht und der Konzentrationsabfall mit einem Flammenionisationsdetektor (FID) über den Zeitraum von 24 Stunden gemessen. Die Figuren 3a und 3b zeigen diesen Sachverhalt. Es sind verschiedene Messreihen durchgeführt worden. Exemplarisch zeigen die Figuren 3a und 3b die zeitliche Entwicklung der Konzentrationsabnahme von Heptan (Alkangemisch) und Limonen (Terpene) in einer leeren Box im Vergleich mit der Konzentrationsabnahme in derselben Box mit einer flachen Feuchtespeicherplatte 2. Die entsprechenden Messwerte für mit Heptan versetzte Raumluft sind in Figur 3a aufgenommen, während die Messergebnisse in Figur 3b die Messwerte für Limonen zeigen. Die Kurve A zeigt die Konzentrationsabnahme bei eingebrachter Feuchtespeicherplatte 2, während die Kurve B die Konzentrationsabnahme von Heptan in der leeren Box zeigt. Entsprechend zeigt die Kurve C die Konzentrationsabnahme bei eingebrachter Feuchtespeicherplatte 2, während die Kurve D die Konzentrationsabnahme von Limonen in der leeren Box zeigt. Bereits eine Fläche von ca. 0,125 m² der Feuchtespeicherplatte 2 reichte aus, um die obigen Ergebnisse zu erzielen.

Weil die Einzelkomponenten des Stoffgemisches und der Feuchtespeicherplatten 1, 2 nicht brennbar sind und weil Wasserglas Eigenschaften eines Flammschutzmittels aufweist und als Bindemittel dient, sind die Feuchtespeicherplatten 1, 2 als nicht brennbar zu bezeichnen.

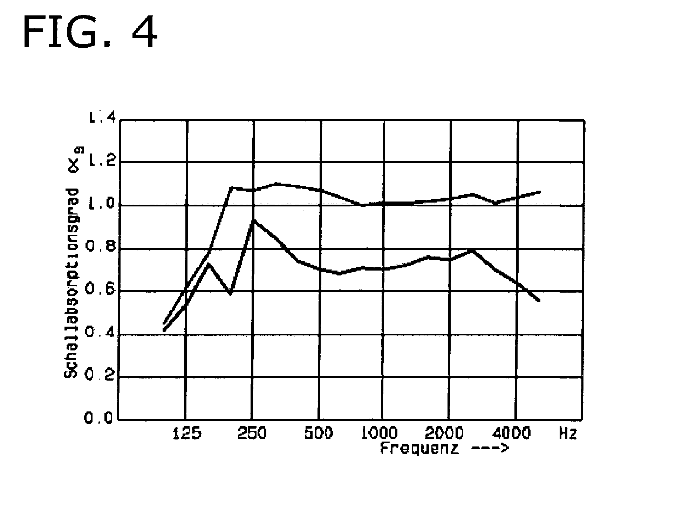

Durch die poröse Oberfläche der Feuchtespeicherplatten 1, 2 und die gewählte günstige Strukturierung der Feuchtespeicherplatten 1 resultieren sehr gute schallabsorbierende Eigenschaften im tief-, mittel-, als auch im hochfrequenten Bereich. Messergebnisse einer Schallabsorptionsmessung der Feuchtespeicherplatte sind in Figur 4 dargestellt. Die untere Kurve zeigt das Ergebnis der Messung im schallharten Raum mit 2,5 m² der Feuchtespeicherplatten 1, da nicht mehr Feuchtespeicherplatten zur Verfügung standen. Normalerweise wird die Messung mit 12 m² durchgeführt. Daher mussten die Messergebnisse auf 12 m² hochgerechnet werden, was die obere Kurve zeigt.

Alle Komponenten des Stoffgemisches sind als unbedenklich einzustufen. Es sind alles durchweg natürlich vorkommende Komponenten, wobei keine gesundheitsgefährdenden Eigenschaften bekannt sind.

Mit dem hier beschriebenen Verfahren zur Herstellung der erfindungsgemässen Feuchtespeicherplatten 1, 2 sind sehr diffusionsoffene und feuchteaktive Feuchtespeicherplatten 1, 2 herstellbar, welche die Feuchtespeichereigenschaften aller bekannten Innenraummaterialien deutlich übertreffen. Ebenso konnte gezeigt werden, dass sich durch den Einsatz der Feuchtespeicherplatten 1, 2, eine deutliche Reduktion von Luftschadstoffen in der Raumluft bemerkbar macht und somit das Innenraumklima nachhaltig verbessert werden kann.

Eine weitere spezielle Entwicklung eines Stoffgemisches in Form einer Kohle-Kieselsäuremischung mit sehr guten Feuchtespeichereigenschaften zum Einsatz in Feuchtespeicherplatten weist auch wärmeisolierende Eigenschaften auf.
Dieses Stoffgemisch als Kohle-Kieselsäuremischung bläht sich unter der Einwirkung von Feuer auf und wirkt durch die daraus resultierende Luftporenbildung isolierend gegenüber Hitze. Eine Feuchtespeicherplatte kann aus einem Anteil dieser Kohle-Kieselsäuremischung und einem Anteil des oben beschriebenen Stoffgemisches bestehen, wodurch die Feuchtespeichereigenschaften der Feuchtespeicherplatten noch verbessert werden können.

### Herstellung einer weiteren Ausführungsform des Stoffgemisches (spezielle Kohle - Kieselsäuremischung):

- 25 Masse % Aktivkohlepulver, wird mit 75 Masse % pyrogener Kieselsäure vermischt, bis ein homogenes Gemenge entsteht.
- Pro kg dieses Trockengemenges bei 20 °C und 50 % relativer Luftfeuchte werden 0,5 bis 0,75 Liter Kali-Wasserglas unter ständigem rühren mit einem langsam laufenden Rührwerk vermischt. Die Rührzeit beträgt ca. 5 Minuten.
- Es entsteht dabei eine schwarze, sehr dickflüssige bis gelartige Substanz.
- Anschliessend wird die Kohle-Kieselsäuremischung auf eine Dicke von 1 cm auf einer nicht klebenden Oberfläche gewalzt.
- Nach 24 stündiger Trocknung bei 23 °C und 50 % relativer Luftfeuchte wird die gewalzte Kohle-Kieselsäuremischung in handliche Stücke zerbrochen.
- Diese Stücke werden zwischen 1 bis 5 Stunden, je nach gewünschter Korngrösse, in eine Kugelmühle gegeben. Durch diesen Vorgang erhält man eine Körnung der Kohle-Kieselsäuremischung zwischen 1 mm bis 5 mm Durchmesser.

Stoffgemisch bzw. Feuchtespeicherplatten 1, 2 mit Kohle-Kieselsäuremischung:

Unter Verwendung der Kohle-Kieselsäuremischung ist ein Stoffgemisch bzw. sind Feuchtespeicherplatten 1, 2 entsprechend oben erläutertem Verfahren herstellbar. Das Mischungsverhältnis des Stoffgemisches bzw. einer Feuchtespeicherplatte 1, 2 umfassend die Kohle-Kieselsäuremischung beträgt:
etwa 16 M-% Bims
etwa 50 M-% Luftaktivkohle zerkleinert
etwa 21 M-% Kohle-Kieselsäuremischung
etwa 8 M-% Blähtonsand
etwa 4,5 M-% Kohlefasern 6mm und
etwa 0,5 M-% Glasfaserschnitzel 6mm.

### Bezugszeichenliste

1 Feuchtespeicherplatte strukturiert
2 Feuchtespeicherplatte flach
3 Lehmbauplatte
4 Calciumsilikatplatte
5 Gipsplatte unbehandelt

## Patentansprüche

1. Feuchtespeicherndes Stoffgemisch, umfassend einen Basisbestandteil aus Luftaktivkohle, **dadurch gekennzeichnet, dass** das Stoffgemisch neben Luftaktivkohle Bims, eine pyrogene Kieselsäure und Blähtonsand als Füllmittel, und ein Bindemittel in Form von flüssigem Wasserglas aufweist.

2. Feuchtespeicherndes Stoffgemisch nach Anspruch 1, **dadurch gekennzeichnet, dass** das Wasserglas Kali-Wasserglas ist.

3. Feuchtespeicherndes Stoffgemisch nach Anspruch 1 oder 2, **dadurch gekennzeichnet, dass**
das Stoffgemisch ein Mischungsverhältnis von:
etwa 50 M-% Luftaktivkohle (Basisbestandteil),
etwa 33 M-% Bims (Füllmittel),
etwa 2 M-% pyrogener Kieselsäure (Füllmittel),
etwa 10 M-% Blähtonsand (Füllmittel), und
eine Menge von 800 ml flüssiges Wasserglas, als Bindemittel, pro Kilogramm des Stoffgemisches aus Basisbestandteil und Füllmittel aufweist.

4. Feuchtespeicherndes Stoffgemisch nach Anspruch 2,
**dadurch gekennzeichnet, dass**
der pH-Wert des Kali-Wasserglases grösser als 11 ist.

5. Verfahren zur Herstellung des feuchtespeichernden Stoffgemisches nach Anspruch 1 oder 2, **gekennzeichnet durch**:
- Abwaage des Basisbestandteils und der Füllmittel,
- Durchmischung des Basisbestandteils und der Füllmittel zu einer Trockenmischung, anschliessende
- Zugabe eines entsprechenden Anteils an flüssigem Wasserglas, insbesondere Kali-Wasserglas als Bindemittel zur Trockenmischung unter ständigem Rühren, und anschliessende
- Verrührung des Stoffgemisches zu einer einheitlichen Masse.

6. Verwendung des feuchtespeichernden Stoffgemisches nach den Ansprüchen 1 bis 4, **dadurch gekennzeichnet, dass** dieses zur Herstellung einer Feuchtespeicherplatte (2) mit glatter Oberfläche oder einer Feuchtespeicherplatte (1) mit einer strukturierten Oberfläche für das Baugewerbe eingesetzt wird.

7. Feuchtespeicherplatte (2, 1) mit glatter oder strukturierter Oberfläche, umfassend einen Basisbestandteil aus Luftaktivkohle, **dadurch gekennzeichnet, dass** die Feuchtespeicherplatte ein Stoffgemisch aufweist, welches neben dem Basisbestandteil aus Luftaktivkohle, ein Füllmittelgemisch umfassend Bims, eine pyrogene Kieselsäure und Blähtonsand, sowie ein Bindemittel in Form von Wasserglas, insbesondere Kali-Wasserglas und mindestens ein Verstärkungsmittel in Form von Armierungsfasern umfasst.

8. Feuchtespeicherplatte (2, 1) nach Anspruch 7, **dadurch gekennzeichnet, dass** die Feuchtespeicherplatte mindestens annähernd 20 M-% des Stoffgemisches gemäss Anspruch 1 beinhaltet.

9. Feuchtespeicherplatte nach Anspruch 7,
**dadurch gekennzeichnet, dass** die
Armierungsfasern insbesondere Glasfasern und/oder Kohlefasern sind und zur Unterstützung und Sicherstellung der Eigenstabilität der Feuchtespeicherplatten (1, 2) dienen.

10. Feuchtespeicherplatte nach Anspruch 7, **dadurch gekennzeichnet, dass** das Stoffgemisch als Verstärkungsmittel jeweils etwa zwischen 0,1 und 10 M-% Glasfasern und/oder zwischen 0,1 und 10 M-% Kohlefasern, bevorzugt 0,5 M-% Glasfasern und/oder bevorzugt 4,5 M-% Kohlefasern, umfasst.

11. Verfahren zur Herstellung von Feuchtespeicherplatten nach Anspruch 7,
**gekennzeichnet durch**:
- Abwaage des Basisbestandteils und der Füllmittel,
- Durchmischung des Basisbestandteils und der Füllmittel zu einer Trockenmischung, anschliessende
- Zugabe eines entsprechenden Anteils an flüssigem Wasserglas, insbesondere Kali-Wasserglas als Bindemittel zur Trockenmischung unter ständigem Rühren, und anschliessende
- Verrührung des Stoffgemisches zu einer einheitlichen Masse
- Zugabe von Verstärkungsmitteln in Form von Armierungsfasern
- Befüllen einer Form mit dem Stoffgemisch
- Verpressung der mit dem Stoffgemisch befüllten Form
- Aushärtung des Stoffgemisches in der Form **durch** CO₂ Aufnahme
- Trockung des ausgehärteten Stoffgemisches.

12. Verfahren zur Herstellung von Feuchtespeicherplatten nach Anspruch 11, **dadurch gekennzeichnet, dass** die Aushärtung durch Zuführung von CO₂ beschleunigt wird.

13. Verfahren zur Herstellung von Feuchtespeicherplatten nach Anspruch 11, **dadurch gekennzeichnet, dass** die Trocknung des Stoffgemisches in einem Temperaturbereich zwischen 10 °C und 35 °C und einer relativen Luftfeuchtigkeit zwischen 20 % und 70% in einem Zeitraum von 48 bis 72 Stunden durchgeführt wird.

14. Verfahren zur Herstellung des feuchtespeichernden Stoffgemisches gemäss Anspruch 1, **dadurch gekennzeichnet, dass**
- eine Trockenmischung von etwa 25 M-% Aktivkohlepulver mit 75 M-% pyrogener Kieselsäure mit einer Menge flüssigem Kali-Wasserglas im Verhältnis von 0,5 bis 0,75 l/Kg zur Trockenmischung vermischt werden,
- das Stoffgemisch unter ständigem Rühren verrührt wird und
- das Stoffgemisch an der Umgebungsluft trocknen gelassen wird.

15. Verfahren nach Anspruch 14, **dadurch gekennzeichnet, dass** das Stoffgemisch
- auf einer Oberfläche ausgewalzt wird und nach einer Trocknungszeit von etwa 24 Stunden in Umgebungsluft manuell oder in einer Mühle zerkleinert wird.

## Claims

1. Moisture-storing substance mixture, comprising a base component of air activated carbon, **characterised in that**, besides air activated carbon, the substance mixture contains pumice, a fumed silica and expanded clay sand as filler material, and a binder in the form of liquid water glass.

2. Moisture-storing substance mixture according to claim 1, **characterised in that** the water glass is potash water glass.

3. Moisture-storing substance mixture according to either of claims 1 or 2, **characterised in that** the substance mixture has a mixture ratio of:
about 50% by mass air activated carbon (base component)
about 33% by mass pumice (filler material),
about 2% by mass fumed silica (filler material),
about 10% by mass expanded clay sand (filler material), and
a quantity of 800 ml liquid water glass as a binder, per kilogram of the mixture of base component and filler.

4. Moisture-storing substance mixture according to claim 2, **characterised in that**
the pH value of the potash water glass is higher than 11.

5. Method for producing the moisture-storing substance mixture according to either of claims 1 or 2, **characterised by**:
- Weighing the base component and the filler materials,
- Thoroughly mixing the base component and the filler materials to form a dry mixture, followed by
- Adding a corresponding proportion of liquid water glass, particularly potash water glass, as a binder for dry mixing with constant stirring, and then
- Whipping the substance mixture into a uniform mass.

6. Use of the moisture-storing substance mixture according to any of claims 1 to 4, **characterised in that** it is used for producing a moisture-storing panel (2) with a smooth surface or a moisture-storing panel (1) with a textured surface for the building industry.

7. Moisture-storing panel (2, 1) with smooth or textured surface, comprising a base component of air activated carbon, **characterised in that** the moisture-storing panel comprises a mixture of substances that includes, besides the basic constituent of air activated carbon, a filler substance mixture comprising pumice, a fumed silica and expanded clay sand, and a binder in the form of water glass, particularly potash water glass, and at least one reinforcing agent in the form of reinforcing fibres.

8. Moisture-storing panel (2, 1) according to claim 7, **characterised in that** the moisture-storing panel contains at least approximately 20% by mass of the substance mixture according to claim 1.

9. Moisture-storing panel according to claim 7, **characterised in that** the reinforcing fibres are particularly glass fibres and/or carbon fibres, and serve to support and ensure the inherent stability of the moisture-storing plates (1, 2).

10. Moisture-storing panel according to claim 7, **characterised in that** the substance mixture comprises respectively about 0.1 to 10 M by mass of glass fibres and/or between 0.1 and 10% by mass of carbon fibres, preferably 0.5% by mass of glass fibres and/or preferably 4.5% by mass of carbon fibres.

11. A method for producing moisture-storing panels according to claim 7, **characterised by**:
- Weighing the base component and the filler materials,
- Thoroughly mixing the base component and the filler materials to form a dry mixture, followed by
- Adding a corresponding proportion of liquid water glass, particularly potash water glass, as a binder for dry mixing with constant stirring, and then
- Whipping the substance mixture into a uniform mass
- Adding reinforcing means in the form of reinforcing Fibres
- Filling a mould with the substance mixture
- Compacting the mould that has been filled with the substance mixture
- Curing the substance mixture in the mould by the uptake of CO₂
- Drying the cured substance mixture.

12. Method for producing moisture-storing panels according to claim 11, **characterised in that** the curing is accelerated by the introduction of CO₂.

13. Method for producing moisture-storing panels according to claim 11, **characterised in that** drying of the substance mixture is carried out in a temperature range between 10 °C and 35 °C, and with relative humidity between 20% and 70% over a period of 48 to 72 hours.

14. Method for preparing the moisture-storing substance mixture according to claim 1, **characterised in that**
- a dry mixture of about 25% by mass of activated carbon powder and 75% by mass fumed silica are mixed with a quantity of liquid potash water glass in a ratio of 0.5 to 0.75 l/kg to form a dry mixture,
- the substance mixture is thoroughly mixed by continuous stirring, and
- the substance mixture is left to dry in the ambient air.

15. Method according to claim 14, **characterized in that** the substance mixture is rolled out on a surface and after a drying time of about 24 hours in the ambient air is crushed either manually or in a mill.

## Revendications

1. Mélange de matières accumulateur d'humidité, comprenant du charbon activé à l'air en tant que composant de base, **caractérisé en ce que** ledit mélange de matière comporte, outre le charbon activé à l'air, de la ponce, une silice pyrogénée et du sable d'argile expansée en tant que charges, et un liant sous forme d'un orthosilicate liquide.

2. Mélange de matières accumulateur d'humidité selon la revendication 1, **caractérisé en ce que** ledit orthosilicate est de l'orthosilicate de potassium.

3. Mélange de matières accumulateur d'humidité selon les revendications 1 ou 2, **caractérisé en ce que**
ledit mélange de matières présente le rapport de mélange suivant :
environ 50 % en masse de charbon activé à l'air (composant de base),
environ 33 % en masse de ponce (charge),
environ 2 % en masse de silice pyrogénée (charge),
environ 10 % en mase de sable d'argile expansée (charge), et
une quantité de 800 ml d'orthosilicate liquide, en tant que liant, par kilogramme du mélange de matières réalisé à partir du composant de base et des charges.

4. Mélange de matières accumulateur d'humidité selon la revendication 2, **caractérisé en ce que** le pH de l'orthosilicate de potassium est supérieur à 11.

5. Procédé permettant de préparer le mélange de matières accumulateur d'humidité selon les revendications 1 ou 2, **caractérisé par** :
- la pesée du composant de base et des charges,
- la réalisation d'un mélange sec en mélangeant le composant de base et les charges, puis
- l'ajout audit mélange sec d'une proportion correspondante d'orthosilicate liquide, s'agissant notamment d'orthosilicate de potassium, en tant que liant, ledit ajout étant réalisé sous agitation permanente, et ensuite
- l'agitation du mélange de matières jusqu'à obtenir une masse homogène.

6. Utilisation du mélange de matières accumulateur d'humidité selon les revendications 1 à 4, **caractérisée en ce que** celui-ci est mis en oeuvre pour fabriquer un panneau accumulateur d'humidité (2) ayant une surface lisse ou un panneaux accumulateur d'humidité (1) ayant une surface structurée, destiné au secteur du bâtiment.

7. Panneau accumulateur d'humidité (2, 1) ayant une surface lisse ou structurée, comprenant du charbon activé à l'air en tant que composant de base, **caractérisé en ce que** ledit panneau accumulateur d'humidité comporte un mélange de matières comprenant, outre le charbon activé à l'air en tant que composant de base, un mélange de charges comprenant de la ponce, une silice pyrogénée et du sable d'argile expansée, ainsi qu'un liant sous forme d'un orthosilicate, s'agissant notamment d'orthosilicate de potassium, et au moins un agent de renforcement sous forme de fibres de renforcement.

8. Panneau accumulateur d'humidité (2, 1) selon la revendication 7, **caractérisé en ce que** ledit panneau accumulateur d'humidité contient au moins approximativement 20 % en masse du mélange de matières selon la revendication 1.

9. Panneau accumulateur d'humidité selon la revendication 7,
**caractérisé en ce que**
les fibres de renforcement sont plus particulièrement des fibres de verre et/ou des fibres de carbone et servent à renforcer et assurer la stabilité que le panneau accumulateur d'humidité (1, 2) présente sans support extérieur.

10. Panneau accumulateur d'humidité selon la revendication 7, **caractérisé en ce que** le mélange de matières comprend, en tant qu'agent de renforcement, environ entre 0,1 à 10 % en masse de fibres de verre et/ou entre 0,1 et 10 % en masse de fibres de carbone, préférentiellement 0,5 % en masse de fibres de verre et/ou préférentiellement 4,5 % en masse de fibres de carbone.

11. Procédé de fabrication de panneaux accumulateurs d'humidité selon la revendication 7, **caractérisé par** :
- la pesée du composant de base et des charges,
- la réalisation d'un mélange sec en mélangeant le composant de base et les charges, puis
- l'ajout audit mélange sec d'une proportion correspondante d'orthosilicate liquide, s'agissant notamment d'orthosilicate de potassium, en tant que liant, ledit ajout étant réalisé sous agitation permanente, et ensuite
- l'agitation du mélange de matières jusqu'à obtenir une masse homogène
- l'ajout d'agents de renforcement sous forme de fibres de renforcement
- le remplissage d'un moule avec ledit mélange de matières
- l'esposition du moule, rempli avec ledit mélange de matières, à une pression
- le durcissement du mélange de matières au sein du moule par absorption de CO₂
- le séchage du mélange de matières durci.

12. Procédé de fabrication de panneaux accumulateurs d'humidité selon la revendication 11, **caractérisé en ce que** le durcissement est accéléré par un apport de CO₂.

13. Procédé de fabrication de panneaux accumulateurs d'humidité selon la revendication 11, **caractérisé en ce que** le séchage du mélange de matières est réalisé, pendant une durée de 48 à 72 heures, dans une gamme de températures entre 10 °C et 35 °C et une hygrométrie relative entre 20 % et 70 %.

14. Procédé permettant de préparer le mélange de matières accumulateur d'humidité selon la revendication 1, **caractérisé en ce que** l'on :
- réalise un mélange à partir d'un mélange sec comportant environ 25 % en masse de charbon activé en poudre et 75 % en masse de silice pyrogénée et à partir d'orthosilicate de potassium liquide, ce dernier étant mis en oeuvre dans une quantité correspondant à un rapport de 0,5 à 0,75 l/kg dudit mélange sec,
- soumet le mélange de matières à une agitation permanente, et
- laisse le mélange de matières sécher à l'air ambiant.

15. Procédé selon la revendication 14, **caractérisé en ce que** ledit mélange de matières
- est répandu sur une surface à l'aide d'un cylindre et puis, suite à une durée de séchage d'environ 24 heures à l'air ambiant, broyé manuellement ou à l'aide d'un broyeur.
